# EUROPÄISCHE PATENTSCHRIFT

(11) **EP 0 804 621 B1**
(45) Veröffentlichungstag und Bekanntmachung des Hinweises auf die Patenterteilung: **26.08.1998**
(21) Anmeldenummer: 95921644.1
(22) Anmeldetag: 20.06.1995
(51) Int. Cl.: C21B 13/02, C21B 13/00

(54) **VERFAHREN ZUR DIREKTREDUKTION VON EISENOXIDHÄLTIGEM MATERIAL**
DIRECT REDUCTION PROCESS FOR IRON OXIDE-CONTAINING MATERIALS
PROCEDE DE REDUCTION DIRECTE DE MATERIAUX CONTENANT DE L'OXYDE DE FER

(30) Priorität: 23.06.1994 AT 1249/94
(43) Veröffentlichungstag der Anmeldung: 05.11.1997
(73) Patentinhaber: VOEST-ALPINE INDUSTRIEANLAGENBAU GMBH, 4020 Linz (AT); Brifer International Ltd., Bridgetown (BB)
(72) Erfinder: CIP, Gerhard, A-4040 Linz (AT); MILIONIS, Konstantin, . (AT); GUSCHEH, Morteza Sadat, A-4040 Linz (AT); WHIPP, Roy Hubert, Jr., Miami, FL 33176 (US)
(74) Vertreter: Kopecky, Helmut, Dipl.-Ing. Kopecky & Schwarz Patentanwälte
(86) Internationale Anmeldenummer: AT9500122
(87) Internationale Veröffentlichungsnummer: WO9600303

(56) Entgegenhaltungen:
- EP-A- 0 428 098
- FR-A- 975 404
- GB-A- 799 551
- US-A- 4 150 972
- US-A- 4 880 459

## Beschreibung

Die Erfindung betrifft ein Verfahren zur Direktreduktion von eisenoxidhältigem Material, wobei Synthesegas, vorzugsweise reformiertes Erdgas, mit bei der Direktreduktion des eisenoxidhältigen Materials entstehendem Topgas vermischt und als bei Reduktionstemperatur nicht krackendes Reduktionsgas zur Direktreduktion verwendet wird, sowie eine Anlage zur Durchführung des Verfahrens.

Ein Verfahren dieser Art ist beispielsweise aus der US-A - 2,752,234, der US-A -5,082.251 und der EP-A - 0 571 358 bekannt.

Aus der EP-A - 0 571 358 ist es bekannt, die Reduktion von Feinerz nicht ausschließlich über die stark endotherme Reaktion mit H₂ gemäß

*Fe*_{*2*}*O*_{*3*} *+* 3*H*_{*2*} *=* 2*Fe+* 3*H*_{*2*}*O - ΔH*,

sondern zusätzlich über die Reaktion mit CO, gemäß

*Fe*_{*2*}*O*_{*3*} *+* 3*CO =* 2*Fe +* 3*CO*₂ +ΔH,

die exotherm ist, durchzuführen. Hierdurch gelingt es, die Betriebskosten, insbesondere die Energiekosten, beträchtlich zu senken.

Metallische Anlagenteile, die mit einem CO-hältigen Reduktionsgas in Kontakt gelangen, sind jedoch einer hohen Korrosionsbelastung ausgesetzt: Es kommt u.a. zu einer Metallzersetzung, die in der Fachliteratur als "metal dusting" bezeichnet ist. "Metal dusting" tritt verstärkt bei höheren Temperaturen auf, wodurch insbesondere Anlagenteile, die mit heißem CO-hältigem Reduktionsgas in Kontakt gelangen, gefährdet sind. Dies sind bei einer Anlage zur Durchführung des eingangs erwähnten Verfahrens insbesondere die der Direktreduktion dienenden Reaktoren und der das Reduktionsgas auf Reduktionstemperatur erhitzende Gaserhitzer.

Schwierigkeiten können bei einem Verfahren gemäß dem Stand der Technik auftreten, wenn das Reduktionsgas einen zu hohen oder einen zu niedrigen Wassergehalt aufweist. Ist der Wassergehalt zu hoch, wird das Reduktionspotential des Reduktionsgases niedriger. Die Folge davon ist, daß mehr Reduktionsgas zur Direktreduktion benötigt wird, als entsprechend dem chemischen Potential des Reduktionsgases eigentlich notwendig wäre. Eine weitere Schwierigkeit stellt sich dann ein, wenn der Wassergehalt des Reduktionsgases zu niedrig ist, da ein zu trockenes Reduktionsgas in erhöhtem Maß zu "metal dusting" führt. Um die einen und die anderen Nachteile zu minimieren, ist es notwendig, den optimalen Wassergehalt mit großer Genauigkeit einzustellen.

Die Erfindung bezweckt die Vermeidung dieser Nachteile und Schwierigkeiten und stellt sich die Aufgabe, ein Verfahren der eingangs beschriebenen Art und eine Anlage zur Durchführung des Verfahrens zu schaffen, welche in einfacher Art und Weise das Auftreten von "metal dusting" trotz eines erhöhten CO-Gehaltes des Reduktionsgases minimieren oder verhindern, insbesondere in einer verfahrenstechnisch bzw. konstruktiv einfachen und kostengünstigen Art, so daß die Lebensdauer metallischer Anlagenteile beträchtlich erhöht wird, wobei jedoch das chemische Reduktionspotential des Reduktionsgases optimal ausgeschöpft werden kann. Hierdurch soll der Energiebedarf. insbesondere der Bedarf an Reduktionsgas, minimiert werden.

Diese Aufgabe wird erfindungsgemäß dadurch gelöst, daß im Reduktionsgas ein H₂O-Gehalt zwischen 1 und 2 Vol.%, vorzugsweise im Bereich von etwa 1,5 Vol.%. eingestellt wird, indem ein Teilvolumen des Topgases vor der Verwendung als Reduktionsgas einer CO₂-Wäsche unterzogen wird, wobei das der CO₂-Wäsche unterzogene Topgas mit dem Synthesegas gemischt, auf eine vorbestimmte Temperatur durch Wasserberieselung direkt gebracht und dabei H₂O-gesättigt wird, nach der direkten Wasserberieselung durch Zumischen eines CO₂-ungewaschenen Topgases auf eine Temperatur über die Sättigungstemperatur erwärmt wird, und anschließend als Reduktionsgas eingesetzt wird.

Durch die direkte Kühlung bzw. direkte Erwärmung durch Wasserberieselung des der CO₂-Wäsche unterzogenen Topgases und des zugemischten Synthesegases auf eine vorbestimmte Temperatur gelingt es, diese Gasmischung mit Wasser zu sättigen, wobei die Temperatur entsprechend dem gewünschten Wassergehalt gewählt wird. Durch die Einstellung einer bestimmten Temperatur des Reduktionsgases - was sich regelungstechnisch sehr einfach und ohne großen Aufwand mit großer Genauigkeit verwirklichen läßt - gelingt es, den Wassergehalt im Reduktionsgas mit sehr großer Genauigkeit einzustellen, u.zw. mit wesentlich größerer Genauigkeit als beispielsweise durch Dampfeindüsung oder andere Maßnahmen.

Um eine Kondensatbildung des im gesättigten Zustand den direkten Kühler verlassenden Reduktionsgases zu vermeiden - eine solche Kondensatbildung würde zur Bildung einer schwefeligen Säure in den gasführenden Rohren führen, was einen Lochfraß ergäbe -, wird die Temperatur des Reduktionsgases auf eine Temperatur über der Sättigungstemperatur erhöht, u.zw. knapp darüber.

Zwar ist es aus dem einleitend erwähnten Stand der Technik bekannt, daß Reduktionsgase einen H₂O-Gehalt von etwa 1,5 Vol.% aufweisen. Die Einstellung eines H₂O-Gehaltes auf einen bestimmten Wert mit großer Genauigkeit ist im einleitend abgehandelten Stand der Technik ebensowenig angesprochen wie die Art und Weise, wie ein bestimmter H₂O-Gehalt im Reduktionsgas erzielt werden kann.

Aus der FR-A - 975 404 ist es bekannt, Eisenoxid in einer Reduktionszone bei einer Temperatur zwischen 750°C und 900°C zu behandeln, u.zw. mit Hilfe eines hauptsächlich aus Wasserstoff und einem kohlenstoffhältigen Gas bestehenden Reduktionsgases, das bei den vorgenannten Temperaturen in Anwesenheit des Eisenoxids gekrackt werden kann, so daß sich Kohlenstoff auf dem Eisenoxid ablagert. Hierbei wird die auf dem Eisenoxid abgelagerte Kohlenstoffmenge reguliert. indem die Desoxidierung des Eisenoxids in Anwesenheit einer Menge von etwa 32 bis 160 g Wasserdampf pro m³ Gas durchgeführt wird.

Vorzugsweise wird als Synthesegas reformiertes Erdgas eingesetzt und wird das reformierte Erdgas vor der Verwendung als Reduktionsgas einer CO₂-Wäsche unterzogen, wobei ein Teilvolumen des reformierten Erdgases unter Umgehung der CO₂-Wäsche gemeinsam mit dem der CO₂-Wäsche unterzogenen Topgas der direkten Wasserberieselung unterworfen wird.

Zweckmäßig wird ein Teilvolumen des Topgases unter Umgehung der CO₂-Wäsche gemeinsam mit dem der CO₂-Wäsche unterzogenen Topgas der direkten Wasserberieselung unterworfen.

Durch die beiden zuletzt beschriebenen Maßnahmen gelingt es, einen bestimmten CO₂-Gehalt im Reduktionsgas bzw. ein bestimmtes CO/CO₂-Verhältnis im Reduktionsgas sicherzustellen, wodurch eine weitere Minimierung der Gefahr von "metal dusting" erzielt werden kann.

Eine bevorzugte Ausführungsform zur Direktreduktion von eisenoxidhältigem Material, wobei Synthesegas, vorzugsweise reformiertes Erdgas, mit bei der Direktreduktion des eisenoxidhältigen Materials entstehendem Topgas vermischt und als bei Reduktionstemperatur nicht krackendes Reduktionsgas zur Direktreduktion verwendet wird, ist dadurch gekennzeichnet, daß im Reduktionsgas ein H₂O-Gehalt zwischen 1 und 2 Vol.%, vorzugsweise im Bereich von etwa 1,5 Vol.%, eingestellt wird, indem das der CO₂-Wäsche unterzogene Topgas mit dem Synthesegas gemischt, auf eine vorbestimmte Temperatur direkt gebracht und dabei H₂O-gesättigt wird, anschließend einer Tropfenabscheidung unterworfen wird und schließlich als Reduktionsgas eingesetzt wird.

Hierbei wird zur Vermeidung einer Bildung von schwefeliger Säure der Wasserberieselung eine Tropfenabscheidung nachgeordnet, so daß sich bildendes Kondensat aus dem Reduktionsgas entfernt wird.

Eine weitere bevorzugte Ausführungsform zur Direktreduktion von eisenoxidhältigem Material. wobei Synthesegas, vorzugsweise reformiertes Erdgas, mit bei der Direktreduktion des eisenoxidhältigen Materials entstehendem Topgas vermischt und als bei Reduktionstemperatur nicht krackendes Reduktionsgas zur Direktreduktion verwendet wird, ist dadurch gekennzeichnet, daß im Reduktionsgas ein H₂O-Gehalt von 1 bis 2 Vol.%, vorzugsweise von etwa 1,5 Vol.%, eingestellt wird, indem das Topgas vor der Verwendung als Reduktionsgas einer CO₂-Wäsche unterzogen wird, wobei der gewünschte H₂O-Gehalt des Reduktionsgases durch eine Temperaturführung des CO₂₋

Wäschers eingestellt wird. Hierbei wird die Abhängigkeit des H₂O-Gehaltes des den CO₂-Wäscher verlassenden Gases von der Arbeitstemperatur des CO₂-Wäschers ausgenützt.

Anstelle von reformiertem Erdgas kann eines oder können mehrere der folgenden Gase als Synthesegas eingesetzt werden:
- LD-Abgas
- EAF-Abgas
- Gichtgas aus Hochofenanlagen
- Gichtgas aus Corexanlagen
- Kohlegas
- Corexgas aus dem Corexvergaser
- Chemiegase

Eine Anlage zur Durchführung eines Verfahrens mit mindestens einem Direktreduktiongsreaktor zur Aufnahme des eisenoxidhältigen Materials und Reduktion desselben, einer Reduktionsgaszuleitung zu diesem Direktreduktionsreaktor und einer das sich bei der Direktreduktion bildende Topgas vom Direktreduktionsreaktor abführenden Topgas-Ableitung, wobei die Topgas-Ableitung in einen CO₂-Wäscher mündet und aus Synthesegas und Topgas gebildetes Reduktionsgas über die Reduktionsgaszuleitung in den Direktreduktionsreaktor gelangt und die Reduktionsgaszuleitung vom CO₂-Wäscher über einen Gaserhitzer zum Direktreduktionsreaktor führt, ist dadurch gekennzeichnet, daß die Reduktionsgaszuleitung in einen Direkt-Kühler mündet und von diesem weiter zum Gaserhitzer geführt ist und daß die Topgas-Ableitung unter Umgehung des CO₂-Wäschers mittels einer Bypass-Leitung mit der Reduktionsgaszuleitung vor deren Einmündung in den Gaserhitzer leitungsmäßig verbunden ist.

Vorteilhaft sind hierbei zur Herstellung des Synthesegases ein Reformer zur Reformierung von Erdgas und eine vom Reformer ausgehende Reformgasleitung, die mit der Topgas-Ableitung zusammenmündet, vorgesehen, wobei sowohl die Reformgasleitung als auch die Topgas-Ableitung in den CO₂-Wäscher münden.

Zur Einstellung eines bevorzugten CO₂-Gehaltes bzw. eines bestimmten CO/CO₂-Verhältnisses im Reduktionsgas ist vorteilhaft die Reformgasleitung mittels einer den CO₂-Wäscher umgehenden Bypass-Leitung mit der Reduktionsgaszuleitung vor deren Einmündung in den Direkt-Kühler leitungsmäßig verbunden.

Zur Einstellung eines bevorzugten CO₂-Gehaltes im Reduktionsgas ist es weiters vorteilhaft, wenn die Topgas-Ableitung mittels einer den CO₂-Wäscher umgehenden Bypass-Leitung mit der Reduktionsgaszuleitung vor deren Einmündung in den Direkt-Kühler leitungsmäßig verbunden ist.

Eine weitere bevorzugte Ausführungsform der Anlage zur Durchführung des Verfahrens, mit mindestens einem Direktreduktiongsreaktor zur Aufnahme des eisenoxidhältigen Materials und Reduktion desselben, einer Reduktionsgaszuleitung zu diesem Direktreduktionsreaktor und einer das sich bei der Direktreduktion bildende Topgas vom Direktreduktionsreaktor abführenden Topgas-Ableitung, wobei die Topgas-Ableitung in einen CO₂-Wäscher mündet und aus Synthesegas und Topgas gebildetes Reduktionsgas über die Reduktionsgaszuleitung in den Direktreduktionsreaktor gelangt und die Reduktionsgaszuleitung vom CO₂-Wäscher über einen Gaserhitzer zum Direktreduktionsreaktor führt, ist dadurch gekennzeichnet, daß die Reduktionsgaszuleitung in einen Direkt-Kühler mündet und von diesem vor Einmündung in den Gaserhitzer über einen Tropfenabscheider geführt ist.

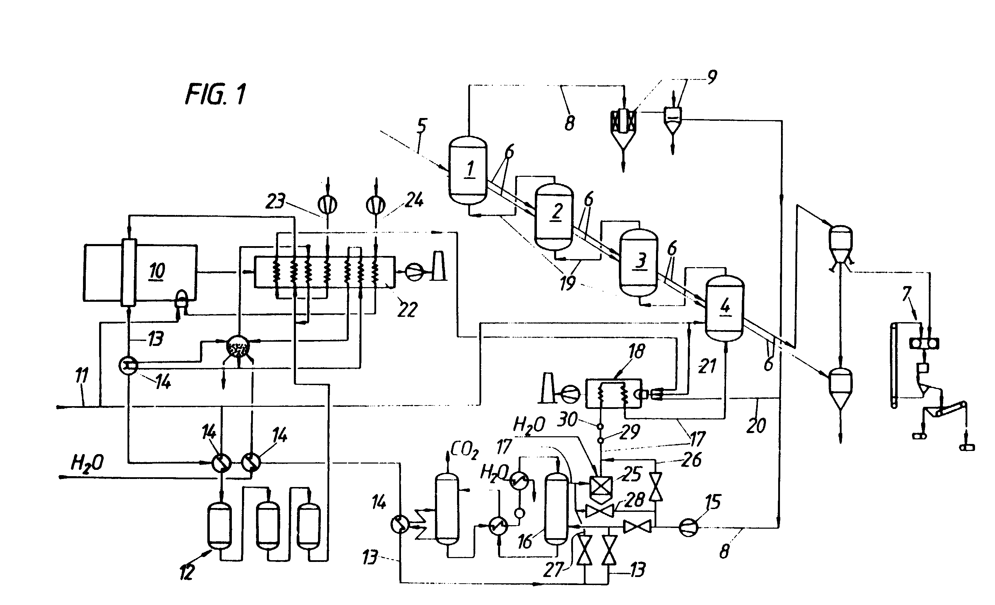

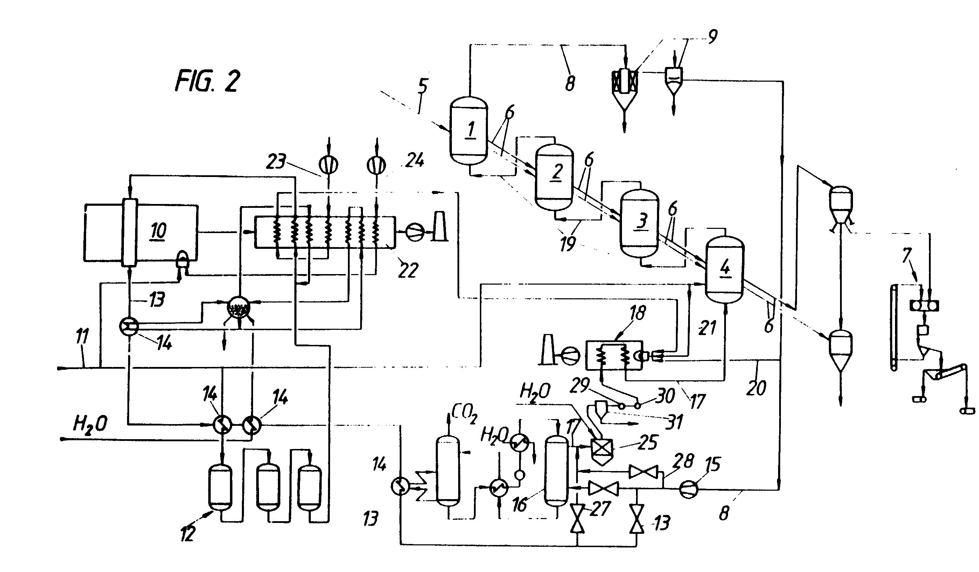

Die Erfindung ist nachfolgend anhand der Fig. 1 und 2 der Zeichnung, die jeweils ein Verfahrensschema nach einer bevorzugten Ausführungsform zeigen, näher erläutert.

Die erfindungsgemäße Anlage gemäß Fig. 1 weist vier in Serie hintereinander geschaltete Wirbelschichtreaktoren 1 bis 4 auf, wobei eisenoxidhältiges Material, wie Feinerz, über eine Erzzuleitung 5 dem ersten Wirbelschichtreaktor 1, in dem die Aufheizung auf Reduktiongstemperatur (bzw. eine Vorreduktion) stattfindet, zugeleitet und anschließend von Wirbelschichtreaktor zu Wirbelschichtreaktor über Förderleitungen 6 geleitet wird. Das fertig reduzierte Material (Eisenschwamm) wird in einer Brikettieranlage 7 heißbrikettiert. Erforderlichenfalls wird das reduzierte Eisen während der Brikettierung vor einer Reoxidation durch ein nicht dargestelltes Inertgas-System geschützt.

Vor Einleitung des Feinerzes in den ersten Wirbelschichtreaktor 1 wird es einer Erzvorbereitung, wie einer Trocknung und einem Sieben, unterzogen, die nicht näher dargestellt ist.

Reduktionsgas wird im Gegenstrom zum Erzdurchfluß von Wirbelschichtreaktor 4 zu Wirbelschichtreaktor 3 bis 1 geführt und als Topgas über eine Topgas-Ableitung 8 aus dem in Gasströmungsrichtung letzten Wirbelschichtreaktor 1 abgeleitet und in einem Naßwäscher 9 gekühlt und gewaschen.

Die Herstellung des Reduktionsgases erfolgt durch Reformieren von über die Leitung 11 zugeführtem und in einer Entschwefelungsanlage 12 entschwefeltem Erdgas in einem Reformer 10. Das aus Erdgas und Dampf gebildete, den Reformer 10 verlassende Gas besteht im wesentlichen aus H₂, CO, CH₄, H₂O und CO₂. Dieses reformierte Erdgas wird über die Reformgasleitung 13 mehreren Wärmetauschern 14 zugeleitet, in denen es auf 80 bis 150°C abgekühlt wird, wodurch Wasser aus dem Gas auskondensiert wird.

Die Reformgasleitung 13 mündet in die Topgas-Ableitung 8, nachdem das Topgas mittels eines Kompressors 15 verdichtet wurde. Das sich so bildende Mischgas wird durch einen CO₂-Wäscher 16 hindurchgeschickt und von CO₂ sowie von H₂S befreit. Es steht nunmehr als Reduktionsgas zur Verfügung. Dieses Reduktionsgas wird über eine Reduktionsgaszuleitung 17 in einem dem CO₂-Wäscher 16 nachgeordneten Gaserhitzer 18 auf eine Reduktionsgastemperatur von etwa 800°C erhitzt und dem in Gasdurchflußrichtung ersten Wirbelschichtreaktor 4 zugeführt, wo es mit den Feinerzen zur Erzeugung von direktreduziertem Eisen reagiert. Die Wirbelschichtreaktoren 4 bis 1 sind in Serie geschaltet; das Reduktionsgas gelangt über die Verbindungsleitungen 19 von Wirbelschichtreaktor zu Wirbelschichtreaktor.

Ein Teil des Topgases wird aus dem Gas-Kreislauf 8, 17, 19 ausgeschleust, um eine Anreicherung von Inertgasen, wie N₂, zu vermeiden. Das ausgeschleuste Topgas wird über eine Zweigleitung 20 dem Gaserhitzer 18 zur Erwärmung des Reduktionsgases zugeführt und dort verbrannt Eventuell fehlende Energie wird durch Erdgas, welches über die Zuleitung 21 zugeführt wird, ergänzt.

Die fühlbare Wärme des aus dem Reformer 10 austretenden reformierten Erdgases sowie der Reformerrauchgase wird in einem Rekuperator 22 genutzt, um das Erdgas nach Durchlauf durch die Entschwefelungsanlage 12 vorzuwärmen, den für die Reformierung benötigten Dampf zu erzeugen sowie die dem Gaserhitzer 18 über die Leitung 23 zugeführte Verbrennungsluft sowie gegebenenfalls auch das Reduktionsgas vorzuwärmen. Die dem Reformer 10 über die Leitung 24 zugeführte Verbrennungsluft wird ebenfalls vorgewärmt.

Zur Einstellung eines bestimmten H₂O-Gehaltes im Reduktionsgas wird das Reduktionsgas in einem Direkt-Kühler 25 einer Direktkühlung bzw. Direkterwärmung, bei der das Reduktionsgas mit kälterem oder heißerem Wasser direkt in Kontakt gelangt, d.h. einer Kühlung bzw. Erwärmung durch Wasserberieselung, unterzogen. Hierbei sinkt bzw. steigt der H₂O-Gehalt im Reduktionsgas bis auf den Sättigungspunkt. Um eine bei der Weiterleitung des H₂O-gesättigten Reduktionsgases zum Gaserhitzer 18 stattfindende Kondensation zu vermeiden, wird über eine Bypass-Leitung 26, die von der Topgas-Ableitung 8 ausgeht und in die Reduktionsgaszuleitung 17 vor deren Einmündung in den Gaserhitzer 18 mündet, wärmeres und ungewaschenes Topgas dem Reduktionsgas zugeführt. Hierdurch wird beispielsweise die im Direkt-Kühler 25 auf eine Temperatur von 70°C eingestellte Temperatur des Reduktionsgases auf beispielsweise 75°C erhöht. Das aus dem Gaserhitzer 18 austretende Reduktionsgas weist dann den der Sättigungstemperatur (d.h. der im Direkt-Kühler 25 erzielten Temperatur des Reduktionsgases) entsprechenden Wassergehalt auf, gemäß dem das Reduktionspotential des Reduktionsgases noch optimal ausgeschöpft werden kann und trotzdem die Gefahr des Auftretens von "metal dusting" minimiert ist.

Zur weiteren Minimierung von "metal dusting" ist vorteilhaft das CO/CO₂-Verhältnis des Reduktionsgases auf einen bestimmten Wert einstellbar, was zweckmäßig dadurch erfolgt, daß beispielsweise reformiertes Gas über eine Bypass-Leitung unter Umgehung des CO₂-Wäschers direkt in die Reduktionsgaszuleitung 17 vor deren Einmündung in den Direkt-Kühler 25 eingespeist wird. Hierbei kann es noch zweckmäßig sein, ein Teilvolumen des Topgases ebenfalls mittels einer Bypass-Leitung 28 (strichliert dargestellt) direkt in das den CO₂-Wäscher 16 verlassende Reduktionsgas, also im ungewaschenen Zustand, einzuleiten.

Sämtliche Bypass-Leitungen 26, 27, 28 sind mit Stell- bzw. Regelventilen ausgestattet, die aufgrund einer Messung des CO/CO₂-Verhältnisses des Reduktionsgases mittels einer Meßstation 29 eingestellt bzw. geregelt werden.

Das gewünschte CO/CO₂-Verhältnis im Reduktionsgas kann auch dadurch eingestellt werden, daß zwar das gesamte Topgas und das gesamte reformierte Gas durch den CO₂-Wäscher 16 hindurchgeleitet werden, dieser jedoch auf einen Auswaschungsgrad eingestellt wird, bei dem ein Teil des CO₂ (und damit auch ein Teil des vom Topgas aus dem Erz bei dessen Erhitzung aufgenommenen H₂S) im aus dem CO₂-Wäscher 16 austretenden Gas verbleibt. Dies hat den Vorteil, daß keine Nebeneinrichtungen, wie Bypass-Leitungen mit Ventilen vorgesehen werden müssen, bedingt allerdings, daß die gesamte Gasmenge, also das gesamte Topgas und das gesamte reformierte Gas, durch den CO₂-Wäscher 16 hindurchgeleitet werden müssen, so daß dieser auf diese Menge bemessen sein muß.

Das den Wirbelschichtreaktor 1 verlassende Topgas weist - in Abhängigkeit vom Schwefelgehalt des Erzes - einen H₂S-Gehalt von 40 bis 140 ppmV auf. Das H₂S-Gas bildet sich - wie oben erwähnt - während der Erhitzung des Feinerzes auf Reduktionstemperatur bzw. während der Vorreduktion des Feinerzes.

Da ein erhöhter H₂S-Gehalt im Reduktionsgas ebenfalls die Bildung von "metal dusting" vermindert, ist es besonders vorteilhaft, wenn H₂S nicht mehr zur Gänze mittels des CO₂-Wäschers aus dem Topgas ausgewaschen wird, sondern dafür Sorge getragen wird, daß der für das Reduktionsgas gewünschte Prozentsatz von H₂S aus dem Topgas dem Reduktionsgas zugeführt wird. Dies kann im vorliegenden Fall mittels der den CO₂-Wäscher 16 umgehenden Bypass-Leitungen 26, 28 verwirklicht werden, die von der Topgasableitung 8 ausgehen und in die Reduktionsgaszuleitung 17 münden. Die in den Bypass-Leitungen 26 und 28 vorgesehenen Regelventile sind derart einstellbar, daß ein H₂S-Gehalt in der Größe von 20 bis 40 ppmV, vorzugsweise in der Größe von etwa 25 ppmV, im Reduktionsgas vorhanden ist. Die Regelventile werden in diesem Fall vorzugsweise über eine H₂S-Meßeinrichtung 30 aktiviert.

Gemäß der in Fig. 2 dargestellten Ausführungsform der Anlage zur Direktreduktion wird die Bildung von schwefeliger Säure durch Kondensation des aus dem Direkt-Kühler 25 gesättigt austretenden Reduktionsgases dadurch verhindert, daß das Reduktionsgas vor Einleiten in den Gaserhitzer 18 durch einen Tropfenabscheider 31 hindurchgeleitet wird.

Die oben beschriebenen Maßnahmen zur Einstellung des gewünschten H₂O-Gehaltes, CO/CO₂-Verhältnisses und H₂S-Gehaltes im Reduktionsgas können einzeln oder auch zu mehreren sowie auch alle gemeinsam ergriffen werden, so daß die für die jeweiligen Betriebsverhältnisse und in Abhängigkeit der Zusammensetzung des Erzes etc. günstigste Verfahrensvariante zur Verfügung steht.

Anhand nachstehenden Beispieles ist die Einstellung eines H₂O-Gehaltes von 1,5 % im Reduktionsgas erläutert:

In einer gemäß Fig. 1 ausgestalteten Anlage zur Direktreduktion von Feinerz, die auf eine Erzeugung von 70 t/h von Eisenschwamm ausgelegt ist, werden 100 t/h getrocknetes Feinerz eingebracht. Die Analyse des Feinerzes ist folgende:

| | |
|---|---|
| Hämatit | 94,2 % |
| Gangart | 2,2 % |
| Schwefel | (0,02 % |

Von dem bei der Direktreduktion entstehenden Topgas werden 78.000 Nm³/h mit 48.000 Nm³/h reformiertem kaltem Erdgas gemischt und über den CO₂-Wäscher 16 geleitet, in dem das gemischte Gas von CO₂ und vom größten Anteil des Schwefels befreit wird.

Das reformierte Erdgas und das Topgas weisen die in der nachstehenden Tabelle angegebene chemische Zusammensetzung auf:

| | Reformiertes Erdgas | Topgas |
|---|---|---|
| CH₄ | 2,80 | 30,60 |
| CO | 4,80 | 5,80 |
| CO₂ | 14,50 | 5,30 |
| H₂ | 64,40 | 53,00 |
| H₂O | 13,50 | 0,70 |
| N₂ | 0,0 | 4,60 |
| H₂S | 0,0 | 60,0 ppmV |

Die Temperatur des reformierten Erdgases beträgt 120°C, die des Topgases 100°C. Das aus dem CO₂-Wäscher 16 austretende Gasgemisch wird dem Direkt-Kühler 25 zugeführt und auf eine Temperatur von 68°C gekühlt. Die chemische Zusammensetzung des gekühlten Gasgemisches ist wie folgt:

| | |
|---|---|
| CH₄ | 20,70 |
| CO | 6,10 |
| CO₂ | 2,50 |
| H₂ | 65,90 |
| H₂O | 1,90 |
| N₂ | 2,90 |
| H₂S | 2 ppmV |

Dieses Gasgemisch wird mit 78.000 Nm³/h des Topgases, das nicht durch den CO₂-Wäscher 16 hindurchgeleitet wurde, sondern über die Bypass-Leitung 26 in die Reduktionsgaszuleitung 17 zugeleitet wird, gemischt. Durch dieses Mischen wird das dem Gaserhitzer 18 und nachfolgend den Wirbelschichtreaktoren 1 bis 4 zugeführte Reduktionsgas gebildet, das eine Temperatur von 75°C und folgende chemische Zusammensetzung aufweist:

| Reduktionsgas | |
|---|---|
| CH₄ | 24,5 |
| CO | 6,0 |
| CO₂ | 3,6 |
| H₂ | 60,9 |
| H₂O | 1,5 |
| N₂ | 3,5 |
| H₂S | 25 ppmV |

Der Metallisierungsgrad (Feₘₑₜ/Fe_{ges}) des Eisenschwammes beträgt 92 %.

Die Erfindung beschränkt sich nicht auf die oben beschriebenen Beispiele, sondern ist auch für andere Direktreduktionsverfahren, z.B. solche, bei denen anstelle der Wirbelschichtreaktoren 1 bis 4 Schachtöfen für Stückerz eingesetzt werden, anwendbar. Anstelle des reformierten Erdgases können auch andere in der Hauptsache CO und H₂ enthaltende reduzierende Gase, wie
- LD-Abgas
- EAF-Abgas
- Gichtgas aus Hochofenanlagen
- Gichtgas aus Corexanlagen
- Kohlegas
- Corexgas aus dem Corexvergaser
- Chemiegase
zur Anwendung gelangen.

## Patentansprüche

1. Verfahren zur Direktreduktion von eisenoxidhältigem Material, wobei Synthesegas, vorzugsweise reformiertes Erdgas, mit bei der Direktreduktion des eisenoxidhältigen Materials entstehendem Topgas vermischt und als bei Reduktionstemperatur nicht krackendes Reduktionsgas zur Direktreduktion verwendet wird, dadurch gekennzeichnet, daß im Reduktionsgas ein H₂O-Gehalt zwischen 1 und 2 Vol.%, vorzugsweise im Bereich von etwa 1,5 Vol.%, eingestellt wird, indem ein Teilvolumen des Topgases vor der Verwendung als Reduktionsgas einer CO₂-Wäsche unterzogen wird, wobei das der CO₂-Wäsche unterzogene Topgas mit dem Synthesegas gemischt, auf eine vorbestimmte Temperatur durch Wasserberieselung direkt gebracht und dabei H₂O-gesättigt wird, nach der direkten Wasserberieselung durch Zumischen eines CO₂-ungewaschenen Topgases auf eine Temperatur über die Sättigungstemperatur erwärmt wird, und anschließend als Reduktionsgas eingesetzt wird (Fig. 1).

2. Verfahren nach Anspruch 1, dadurch gekennzeichnet, daß als Synthesegas reformiertes Erdgas eingesetzt wird und daß das reformierte Erdgas vor der Verwendung als Reduktionsgas einer CO₂-Wäsche unterzogen wird, wobei ein Teilvolumen des reformierten Erdgases unter Umgehung der CO₂-Wäsche gemeinsam mit dem der CO₂-Wäsche unterzogenen Topgas der direkten Wasserberieselung unterworfen wird.

3. Verfahren nach Anspruch 1 oder 2, dadurch gekennzeichnet, daß ein Teilvolumen des Topgases unter Umgehung der CO₂-Wäsche gemeinsam mit dem der CO₂-Wäsche unterzogenen Topgas der direkten Wasserberieselung unterworfen wird.

4. Verfahren zur Direktreduktion von eisenoxidhältigem Material, wobei Synthesegas, vorzugsweise reformiertes Erdgas, mit bei der Direktreduktion des eisenoxidhältigen Materials entstehendem Topgas vermischt und als bei Reduktionstemperatur nicht krackendes Reduktionsgas zur Direktreduktion verwendet wird, dadurch gekennzeichnet, daß im Reduktionsgas ein H₂O-Gehalt zwischen 1 und 2 Vol.%, vorzugsweise im Bereich von etwa 1,5 Vol.%, eingestellt wird, indem das der CO₂-Wäsche unterzogene Topgas mit dem Synthesegas gemischt, auf eine vorbestimmte Temperatur direkt gebracht und dabei H₂O-gesättigt wird, anschließend einer Tropfenabscheidung unterworfen wird und schließlich als Reduktionsgas eingesetzt wird (Fig. 2).

5. Verfahren nach Anspruch 4, dadurch gekennzeichnet, daß als Synthesegas reformiertes Erdgas eingesetzt wird und daß das reformierte Erdgas vor der Verwendung als Reduktionsgas einer CO₂-Wäsche unterzogen wird, wobei ein Teilvolumen des reformierten Erdgases unter Umgehung der CO₂-Wäsche gemeinsam mit dem der CO₂-Wäsche unterzogenen Topgas der direkten Wasserberieselung unterworfen wird.

6. Verfahren nach Anspruch 4 oder 5, dadurch gekennzeichnet, daß ein Teilvolumen des Topgases unter Umgehung der CO₂-Wäsche gemeinsam mit dem der CO₂-Wäsche unterzogenen Topgas der direkten Wasserberieselung unterworfen wird.

7. Verfahren zur Direktreduktion von eisenoxidhältigem Material, wobei Synthesegas, vorzugsweise reformiertes Erdgas, mit bei der Direktreduktion des eisenoxidhältigen Materials entstehendem Topgas vermischt und als bei Reduktionstemperatur nicht krackendes Reduktionsgas zur Direktreduktion verwendet wird, dadurch gekennzeichnet, daß im Reduktionsgas ein H₂O-Gehalt von 1 bis 2 Vol.%, vorzugsweise von etwa 1,5 Vol.%, eingestellt wird, indem das Topgas vor der Verwendung als Reduktionsgas einer CO₂-Wäsche unterzogen wird, wobei der gewünschte H₂O-Gehalt des Reduktionsgases durch eine Temperaturführung des CO₂-Wäschers (16) eingestellt wird.

8. Verfahren nach Anspruch 7, dadurch gekennzeichnet, daß als Synthesegas reformiertes Erdgas eingesetzt wird und daß das reformierte Erdgas vor der Verwendung als Reduktionsgas einer CO₂-Wäsche unterzogen wird, wobei ein Teilvolumen des reformierten Erdgases unter Umgehung der CO₂-Wäsche dem der CO₂-Wäsche unterzogenen Topgas zugemischt wird.

9. Verfahren nach Anspruch 7 oder 8, dadurch gekennzeichnet, daß ein Teilvolumen des Topgases unter Umgehung der CO₂-Wäsche dem der CO₂-Wäsche unterzogenen Topgas zugemischt wird.

10. Verfahren nach einem oder mehreren der Ansprüche 1 bis 9, dadurch gekennzeichnet, daß das der CO₂-Wäsche unterzogene Topgas mit einem oder mehreren der folgenden Gase:
• LD-Abgas
• EAF-Abgas
• Gichtgas aus Hochofenanlagen
• Gichtgas aus Corexanlagen
• Kohlegas
• Corexgas aus dem Corexvergaser
• Chemiegase
als Synthesegas gemischt wird.

11. Anlage zur Durchführung des Verfahrens nach einem oder mehreren der Ansprüche 1 bis 3, mit mindestens einem Direktreduktiongsreaktor (1 bis 4) zur Aufnahme des eisenoxidhältigen Materials und Reduktion desselben, einer Reduktionsgaszuleitung (17) zu diesem Direktreduktionsreaktor (1 bis 4) und einer das sich bei der Direktreduktion bildende Topgas vom Direktreduktionsreaktor (1) abführenden Topgas-Ableitung (8), wobei die Topgas-Ableitung (8) in einen CO₂-Wäscher (16) mündet und aus Synthesegas und Topgas gebildetes Reduktionsgas über die Reduktionsgaszuleitung (17) in den Direktreduktionsreaktor (1 bis 4) gelangt und die Reduktionsgaszuleitung (17) vom CO₂-Wäscher (16) über einen Gaserhitzer (18) zum Direktreduktionsreaktor (1 bis 4) führt, dadurch gekennzeichnet, daß die Reduktionsgaszuleitung in einen Direkt-Kühler (25) mündet und von diesem weiter zum Gaserhitzer (18) geführt ist und daß die Topgas-Ableitung (28) unter Umgehung des CO₂-Wäschers (16) mittels einer Bypass-Leitung (28) mit der Reduktionsgaszuleitung (17) vor deren Einmündung in den Gaserhitzer leitungsmäßig verbunden ist (Fig. 1).

12. Anlage nach Anspruch 11, dadurch gekennzeichnet daß zur Herstellung des Synthesegases ein Reformer (10) zur Reformierung von Erdgas und eine vom Reformer (10) ausgehende Reformgasleitung (15), die mit der Topgas-Ableitung (8) zusammenmündet, vorgesehen sind, wobei sowohl die Reformgasleitung (13 ) als auch die Topgas-Ableitung (8) in den CO₂-Wäscher (16) münden.

13. Anlage nach Anspruch 12, dadurch gekennzeichnet, daß die Reformgasleitung (13) mittels einer den CO₂-Wäscher (16) umgehenden Bypass-Leitung (27) mit der Reduktionsgaszuleitung (17) vor deren Einmündung in den Direkt-Kühler (25) leitungsmäßig verbunden ist.

14. Anlage nach einem oder mehreren der Ansprüche 11 bis 13, dadurch gekennzeichnet, daß die Topgas-Ableitung (X ) mittels einer den CO₂-Wäscher (16) umgehenden Bypass-Leitung (28) mit der Reduktionsgaszuleitung (17) vor deren Einmündung in den Direkt-Kühler (25) leitungsmäßig verbunden ist.

15. Anlage zur Durchführung des Verfahrens nach einem oder mehreren der Ansprüche 4 bis 6, mit mindestens einem Direktreduktiongsreaktor (1 bis 4) zur Aufnahme des eisenoxidhältigen Materials und Reduktion desselben, einer Reduktionsgaszuleitung (17) zu diesem Direktreduktionsreaktor (1 bis 4) und einer das sich bei der Direktreduktion bildende Topgas vom Direktreduktionsreaktor (1) abführenden Topgas-Ableitung (8), wobei die Topgas-Ableitung (8) in einen CO₂-Wäscher (16) mündet und aus Synthesegas und Topgas gebildetes Reduktionsgas über die Reduktionsgaszuleitung (17) in den Direktreduktionsreaktor (1 bis 4) gelangt und die Reduktionsgaszuleitung (17) vom CO₂-Wäscher (16) über einen Gaserhitzer (18) zum Direktreduktionsreaktor (1 bis 4) führt, dadurch gekennzeichnet daß die Reduktionsgaszuleitung (17) in einen Direkt-Kühler (25) mündet und von diesem vor Einmündung in den Gaserhitzer (18) über einen Tropfenabscheider (31) geführt ist (Fig. 2).

16. Anlage nach Anspruch 15, dadurch gekennzeichnet, daß zur Herstellung des Synthesegases ein Reformer (10) zur Reformierung von Erdgas und eine vom Reformer (10) ausgehende Reformgasleitung (15), die mit der Topgas-Ableitung (8) zusammenmündet, vorgesehen sind, wobei sowohl die Reformgasleitung (13) als auch die Topgas-Ableitung (8) in den CO₂-Wäscher (16) münden.

17. Anlage nach Anspruch 15, dadurch gekennzeichnet, daß die Reformgasleitung (13) mittels einer den CO₂-Wäscher (16) umgehenden Bypass-Leitung (27) mit der Reduktionsgaszuleitung (17) vor deren Einmündung in den Direkt-Kühler (25) leitungsmäßig verbunden ist.

18. Anlage nach einem oder mehreren der Ansprüche 15 bis 17, dadurch gekennzeichnet, daß die Topgas-Ableitung (8) mittels einer den CO₂-Wäscher (16) umgehenden Bypass-Leitung (28) mit der Reduktionsgaszuleitung (17) vor deren Einmündung in den Direkt-Kühler (25) leitungsmäßig verbunden ist.

## Claims

1. A process for the direct reduction of iron-oxide-containing material, wherein synthesis gas, preferably reformed natural gas, is mixed with top gas forming in the direct reduction of the iron-oxide-containing material and is used for direct reduction as a reducing gas which does not crack at reduction temperature, characterized in that an H₂O content of between 1 and 2 Vol. %, preferably amounting to about 1.5 Vol. %, is adjusted in the reducing gas by subjecting a partial volume of the top gas to CO₂ scrubbing prior to using it as a reducing gas, wherein the top gas subjected to CO₂ scrubbing is mixed with the synthesis gas, is brought to a predetermined temperature by direct irrigation while being saturated with H₂O, after direct irrigation is heated to a temperature above the saturation temperature by admixing CO₂-unscrubbed top gas and subsequently is used as a reducing gas (Fig. 1).

2. A process according to claim 1, characterized in that reformed natural gas is employed as said synthesis gas and the reformed natural gas is subjected to CO₂ scrubbing prior to being used as a reducing gas, wherein a partial volume of the reformed natural gas under avoidance of CO₂ scrubbing is subjected to direct irrigation together with the top gas subjected to CO₂ scrubbing.

3. A process according to claim 1 or 2, characterized in that a partial volume of the top gas under avoidance of CO₂ scrubbing is subjected to direct irrigation together with the top gas subjected to CO₂ scrubbing.

4. A process for the direct reduction of iron-oxide-containing material, wherein synthesis gas, preferably reformed natural gas, is mixed with top gas forming in the direct reduction of the iron-oxide-containing material and is used for direct reduction as a reducing gas which does not crack at reduction temperature, characterized in that an H₂O content of between 1 and 2 Vol. %, preferably amounting to about 1.5 Vol. %, is adjusted in the reducing gas by mixing the top gas subjected to CO₂ scrubbing with said synthesis gas,
directly bringing the same to a predetermined temperature while saturating it with H₂O, subsequently subjecting it to mist collection and finally using it as a reducing gas (Fig. 2).

5. A process according to claim 4, characterized in that reformed natural gas is employed as said synthesis gas and the reformed natural gas is subjected to CO₂ scrubbing prior to being used as a reducing gas, wherein a partial volume of the reformed natural gas under avoidance of CO₂ scrubbing is subjected to direct irrigation together with the top gas subjected to CO₂ scrubbing.

6. A process according to claim 4 or 5, characterized in that a partial volume of the top gas under avoidance of CO₂ scrubbing is subjected to direct irrigation together with the top gas subjected to CO₂ scrubbing.

7. A process for the direct reduction of iron-oxide-containing material, wherein synthesis gas, preferably reformed natural gas, is mixed with top gas forming in the direct reduction of the iron-oxide-containing material and is used for direct reduction as a reducing gas which does not crack at reduction temperature, characterized in that an H₂O content from 1 to 2 Vol. %, preferably amounting to about 1.5 Vol. %, is adjusted in the reducing gas by subjecting the top gas to CO₂ scrubbing prior to using it as a reducing gas, the desired H₂O content of the reducing gas being adjusted by temperature control of the CO₂ scrubber (16).

8. A process according to claim 7, characterized in that reformed natural gas is employed as said synthesis gas and the reformed natural gas is subjected to CO₂ scrubbing prior to being used as a reducing gas, wherein a partial volume of the reformed natural gas under avoidance of CO₂ scrubbing is admixed to the top gas subjected to CO₂ scrubbing.

9. A process according to claim 7 or 8, characterized in that a partial volume of the top gas under avoidance of CO₂ scrubbing is admixed to the top gas subjected to CO₂ scrubbing.

10. A process according to one or several of claims 1 to 9, characterized in that the top gas subjected to CO₂ scrubbing is mixed with one or several of the following gases as synthesis gas(es):
• LD offgas
• EAF offgas
• blast furnace gas from blast furnace plants
• blast furnace gas from Corex plants
• coal gas
• Corex gas from Corex gasifier
• chemical gases.

11. A plant for carrying out the process according to one or several of claims 1 to 3, comprising at least one direct reduction reactor (1 to 4) for receiving the iron-oxide-containing material and reducing the same, a reducing-gas supply duct (17) leading to said direct reduction reactor (1 to 4) and a top-gas discharge duct (8) carrying off said direct reduction reactor (1) the top gas forming in direct reduction, wherein the top-gas discharge duct (8) runs into a CO₂ scrubber (16) and a reducing gas formed of synthesis gas and of top gas passes into the direct reduction reactor (1 to 4) through the reducing-gas supply duct (17) and the reducing-gas supply duct (17) leads from the CO₂ scrubber (16) to the direct reduction reactor (1 to 4) via a gas heater (18), characterized in that the reducing-gas supply duct runs into a direct cooler (25) and from there is further directed to the gas heater (18), and that by means of a bypass duct (28) avoiding the CO₂ scrubber (16) the top-gas discharge duct (8) is flow-connected with the reducing-gas supply duct (17) before entry of the latter into the gas heater (Fig. 1 ).

12. A plant according to claim 11, characterized in that a reformer (10) for reforming natural gas and a reformed-gas duct (13) departing from the reformer (10) and joining the top-gas discharge duct (8) are provided for the production of the synthesis gas, both the reformed-gas duct (13) and the top-gas discharge duct (8) running into the CO₂ scrubber (16).

13. A plant according to claim 12, characterized in that the reformed-gas duct (13) by means of a bypass duct (27) avoiding the CO₂ scrubber (16) is flow-connected with the reducing-gas supply duct (17) before entry of the latter into the direct cooler (25).

14. A plant according to one or several of claims 11 to 13, characterized in that the top-gas discharge duct (8), by means of a bypass duct (28) avoiding the CO₂ scrubber (16), is flow-connected with the reducing-gas supply duct (17) before entry of the latter into the direct cooler (25).

15. A plant for carrying out the process according to one or several of claims 4 to 6, comprising at least one direct reduction reactor (1 to 4) for receiving the iron-oxide-containing material and reducing the same, a reducing-gas supply duct (17) leading to said direct reduction reactor (1 to 4) and a top-gas discharge duct (8) carrying off the direct reduction reactor (1) the top gas forming in direct reduction, wherein the top-gas discharge duct (8) runs into a CO₂ scrubber (16) and a reducing gas formed of synthesis gas and of top gas passes into the direct reduction reactor (1 to 4) through the reducing-gas supply duct (17) and the reducing-gas supply duct (17) leads from the CO₂ scrubber (16) to the direct reduction reactor (1 to 4) via a gas heater (18), characterized in that the reducing-gas supply duct (17) runs into a direct cooler (25) and from there is conducted through a mist collector (31) before entering the gas heater (18) (Fig. 2).

16. A plant according to claim 15, characterized in that a reformer (10) for reforming natural gas and a reformed-gas duct (13) departing from the reformer (10) and joining the top-gas discharge duct (8) are provided for the production of the synthesis gas, both the reformed-gas duct (13) and the top-gas discharge duct (8) running into the CO₂ scrubber (16).

17. A plant according to claim 15, characterized in that the reformed-gas duct (13) by means of a bypass duct (27) avoiding the CO₂ scrubber (16) is flow-connected with the reducing-gas supply duct (17) before entry of the latter into the direct cooler (25).

18. A plant according to one or several of claims 15 to 17, characterized in that the top-gas discharge duct (8) by means of a bypass duct (28) avoiding the CO₂ scrubber (16) is flow-connected with the reducing-gas supply duct (17) before entry of the latter into the direct cooler (25).

## Revendications

1. Procédé de réduction directe d'un matériau contenant de l'oxyde de fer, dans lequel on mélange du gaz de synthèse, de préférence du gaz naturel reformé, avec du gaz de tête formé lors de la réduction directe du matériau contenant de l'oxyde de fer, et on l'utilise comme gaz de réduction ne subissant pas de craquage à la température de réduction pour la réduction directe, caractérisé en ce que l'on règle dans le gaz de réduction une teneur en H₂O comprise entre 1 et 2 % en volume, de préférence autour de 1,5 % en volume, par un procédé selon lequel on soumet une partie du volume du gaz de tête, avant de l'utiliser comme gaz de réduction, à un lavage du CO₂, on mélange le gaz de tête soumis au lavage du CO₂ avec le gaz de synthèse, on l'amène directement à une température prédéterminée en l'arrosant d'eau et on le sature ainsi en H₂O, on le réchauffe après l'arrosage direct d'eau à une température supérieure à la température de saturation en le mélangeant avec un gaz de tête non soumis au lavage du CO₂, puis on l'utilise comme gaz de réduction (figure 1).

2. Procédé selon la revendication 1, caractérisé en ce que l'on utilise comme gaz de synthèse du gaz naturel reformé et en ce que l'on soumet le gaz naturel reformé à un lavage du CO₂ avant de l'utiliser comme gaz de réduction, une partie du volume du gaz naturel reformé étant soumis directement, sans passer par le lavage du CO₂, à l'arrosage d'eau direct avec le gaz de tête ayant subi le lavage du CO₂.

3. Procédé selon la revendication 1 ou 2, caractérisé en ce que l'on soumet une partie du volume du gaz de tête, sans le faire passer par le lavage du CO₂, à l'arrosage d'eau direct avec le gaz de tête ayant subi le lavage du CO₂.

4. Procédé de réduction directe d'un matériau contenant de l'oxyde de fer, dans lequel on mélange du gaz de synthèse, de préférence du gaz naturel reformé, avec du gaz de tête formé lors de la réduction directe du matériau contenant de l'oxyde de fer, et on l'utilise comme gaz de réduction ne subissant pas de craquage à la température de réduction pour la réduction directe, caractérisé en ce que l'on règle dans le gaz de réduction une teneur en H₂O comprise entre 1 et 2 % en volume, de préférence autour de 1,5 % en volume, par un procédé selon lequel on mélange le gaz de tête ayant subi le lavage de CO₂ avec le gaz de synthèse, on le porte directement à une température prédéterminée, ce qui le sature en H₂O, puis on le soumet à une séparation des gouttes, et on l'utilise finalement comme gaz de réduction (figure 2).

5. Procédé selon la revendication 4, caractérisé en ce que l'on utilise comme gaz de synthèse du gaz naturel reformé et en ce que l'on soumet le gaz naturel reformé à un lavage du CO₂ avant de l'utiliser comme gaz de réduction, une partie du volume du gaz naturel reformé étant soumise directement, sans passer par le lavage du CO₂, à l'arrosage d'eau direct avec le gaz de tête ayant subi le lavage du CO₂.

6. Procédé selon la revendication 4 ou 5, caractérisé en ce que l'on soumet une partie du volume du gaz de tête, sans le faire passer au lavage du CO₂, à l'arrosage d'eau direct avec le gaz de tête ayant subi le lavage du CO₂.

7. Procédé de réduction directe d'un matériau contenant de l'oxyde de fer, dans lequel on mélange du gaz de synthèse, de préférence du gaz naturel reformé, avec du gaz de tête formé lors de la réduction directe du matériau contenant de l'oxyde de fer, et on l'utilise comme gaz de réduction ne subissant pas de craquage à la température de réduction pour la réduction directe, caractérisé en ce que l'on règle dans le gaz de réduction une teneur en H₂O comprise entre 1 et 2 % en volume, de préférence autour de 1,5 % en volume, par un procédé selon lequel on soumet le gaz de tête à un lavage du CO₂ avant de l'utiliser comme gaz de réduction, la teneur en H₂O désirée du gaz de réduction étant réglée par l'ajustement de la température de l'appareil de lavage du CO₂ (16).

8. Procédé selon la revendication 7, caractérisé en ce que l'on utilise comme gaz de synthèse du gaz naturel reformé et en ce que l'on soumet le gaz naturel reformé à un lavage du CO₂ avant de l'utiliser comme gaz de réduction, une partie du volume du gaz naturel reformé étant ajoutée directement, sans passer par le lavage du CO₂, au gaz de tête ayant subi le lavage du CO₂.

9. Procédé selon la revendication 7 ou 8, caractérisé en ce que l'on ajoute une partie du volume du gaz de tête, sans le faire passer au lavage du CO₂, au gaz de tête ayant subi le lavage du CO₂.

10. Procédé selon l'une ou plusieurs des revendications 1 à 9, caractérisé en ce que en ce que l'on mélange le gaz de tête ayant subi le lavage du CO₂ avec, comme gaz de synthèse, un ou plusieurs des gaz suivants:
• des effluents gazeux du procédé LD
• des effluents gazeux du procédé EAF
• du gaz de gueulard de haut-fourneau
• du gaz de gueulard d'installation Corex
• du gaz de houille
• du gaz Corex du gazéificateur Corex
• des gaz de chimie.

11. Installation pour la mise en oeuvre du procédé selon l'une ou plusieurs des revendications 1 à 3, avec au moins un réacteur de réduction directe (1 à 4) pour la réception et la réduction du matériau contenant de l'oxyde de fer, une conduite d'amenée du gaz de réduction (17) à ce réacteur de réduction directe (1 à 4) et une conduite de sortie de gaz de tête (8) pour l'évacuation du réacteur de réduction directe (1) du gaz de tête formé lors de la réduction directe, dans laquelle la conduite de sortie du gaz de tête (8) débouche dans un appareil de lavage du CO₂ (16) et du gaz de réduction formé à partir de gaz de synthèse et de gaz de tête arrive dans le réacteur de réduction directe (1 à 4) par la conduite d'amenée du gaz de réduction (17), et la conduite d'amenée du gaz de réduction (17) va de l'appareil de lavage du CO₂ (16) au réacteur de réduction directe (1 à 4) en passant par un appareil de chauffage du gaz (18), caractérisée en ce que la conduite d'amenée du gaz de réduction débouche dans un refroidisseur direct (25) et, de là, continue ensuite vers l'appareil de chauffage du gaz (18), et en ce que la conduite de sortie du gaz de tête (8) est raccordée à la conduite d'amenée du gaz de réduction (17) au moyen d'une conduite de dérivation (28) contournant l'appareil de lavage du CO₂ (16), avant de déboucher dans l'appareil de chauffage du gaz (figure 1).

12. Installation selon la revendication 11, caractérisée en ce que, pour la préparation du gaz de synthèse, on prévoit un reformeur (10) pour le reformage de gaz naturel et une conduite de gaz reformé (13) sortant du reformeur (10) et débouchant avec la conduite de sortie du gaz de tête (8), la conduite de gaz reformé (13) et la conduite de sortie du gaz de tête (8) débouchant toutes les deux dans l'appareil de lavage du CO₂ (16).

13. Installation selon la revendication 12, caractérisée en ce que la conduite de gaz reformé (13) est raccordée à la conduite d'amenée du gaz de réduction (17) par une conduite de dérivation (27) contournant l'appareil de lavage du CO₂ (16) avant leur débouché dans le refroidisseur direct (25).

14. Installation selon l'une ou plusieurs des revendications 11 à 13, caractérisée en ce que la conduite de sortie du gaz de tête (8) est raccordée à la conduite d'amenée du gaz de réduction (17) par une conduite de dérivation (28) contournant l'appareil de lavage du CO₂ (16) avant leur débouché dans le refroidisseur direct (25).

15. Installation pour la mise en oeuvre du procédé selon l'une ou plusieurs des revendications 4 à 6, avec au moins un réacteur de réduction directe (1 à 4) pour la réception et la réduction du matériau contenant de l'oxyde de fer, une conduite d'amenée du gaz de réduction (17) à ce réacteur de réduction directe (1 à 4) et une conduite de sortie de gaz de tête (8) pour l'évacuation du réacteur de réduction directe (1) du gaz de tête formé lors de la réduction directe, dans laquelle la conduite de sortie du gaz de tête (8) débouche dans un appareil de lavage du CO₂ (16) et du gaz de réduction formé à partir de gaz de synthèse et de gaz de tête arrive dans le réacteur de réduction directe (1 à 4) par la conduite d'amenée du gaz de réduction (17), et la conduite d'amenée du gaz de réduction (17) va de l'appareil de lavage du CO₂ (16) au réacteur de réduction directe (1 à 4) en passant par un appareil de chauffage du gaz (18), caractérisée en ce que la conduite d'amenée du gaz de réduction (17) débouche dans un refroidisseur direct (25) et, de là, passe par un séparateur de gouttes (31) avant de déboucher dans l'appareil de chauffage du gaz (18) (figure 2).

16. Installation selon la revendication 15, caractérisée en ce que, pour la préparation du gaz de synthèse, on prévoit un reformeur (10) pour le reformage de gaz naturel et une conduite de gaz reformé (13) sortant du reformeur (10) et débouchant avec la conduite de sortie du gaz de tête (8), la conduite de gaz reformé (13) et la conduite de sortie du gaz de tête (8) débouchant toutes les deux dans l'appareil de lavage du CO₂ (16).

17. Installation selon la revendication 15, caractérisée en ce que la conduite de gaz reformé (13) est raccordée à la conduite d'amenée du gaz de réduction (17) par une conduite de dérivation (27) contournant l'appareil de lavage du CO₂ (16) avant leur débouché dans le refroidisseur direct (25).

18. Installation selon l'une ou plusieurs des revendications 15 à 17, caractérisée en ce que la conduite de sortie du gaz de tête (8) est raccordée à la conduite d'amenée du gaz de réduction (17) par une conduite de dérivation (28) contournant l'appareil de lavage du CO₂ (16) avant leur débouché dans le refroidisseur direct (25).
